# EUROPEAN PATENT SPECIFICATION

(11) **EP 3 412 481 B1**
(45) Date of publication and mention of the grant of the patent: **06.11.2019**
(21) Application number: 18176216.2
(22) Date of filing: 06.06.2018
(51) Int. Cl.: B60G 17/005, B62K 5/10, B60G 17/017, B60G 21/00, B60K 7/00, B62K 5/05, B62M 7/12

(54) **AUTOMATIC TILTING VEHICLE**
FAHRZEUG MIT AUTOMATISCHER NEIGUNG
VÉHICULE À INCLINAISON AUTOMATIQUE

(30) Priority: 07.06.2017 JP 2017112835
(43) Date of publication of application: 12.12.2018
(73) Proprietor: TOYOTA JIDOSHA KABUSHIKI KAISHA, Toyota-shi, Aichi 471-8571 (JP)
(72) Inventor: NAKATSU, Masatoshi, Toyota-shi, Aichi 471-8571 (JP)
(74) Representative: TBK

(56) References cited:
- WO-A1-2007/127783
- WO-A1-2011/161856
- WO-A1-2015/028767
- WO-A1-2017/062996
- JP-A- 2012 081 784
- JP-A- 2015 037 928
- US-A1- 2013 193 656
- US-B1- 7 648 148

## Description

### BACKGROUND OF THE INVENTION

### 1. Field of the Invention

The present invention relates to an automatic tilting vehicle that automatically tilts (self inclines) to the inside of a turn when turning.

### 2. Description of the Related Art

An automatic tilting vehicle has a vehicle tilting device, and the vehicle is automatically tilted to the inner side of a turn by the vehicle tilting device at the time of turning. For example, International Publication No. 2012/049724 describes an automatic tilting vehicle that includes a pair of front wheels spaced laterally, a swing type vehicle tilting device, and a control unit that controls the vehicle tilting device, and the pair of front wheels are rotatably supported by corresponding wheel carriers. The vehicle tilting device includes a swing member swingable about a swing axis extending in a longitudinal direction of the vehicle, an actuator that swings the swing member about the swing axis, and a pair of connecting rods. The pair of connecting rods are integrally connected at the lower ends to the corresponding wheel carriers and pivotally connected at the upper ends to outer ends of the swing member on both lateral sides of the swing axis.

When the swing member swings about the swing axis, the pair of connecting rods vertically move in opposite directions to each other, so that the front wheels move up and down in opposite directions relative to a vehicle body, thereby the vehicle inclines in a lateral direction. The control unit calculates a target tilt angle of the vehicle for stably turning the vehicle based on a steering operation amount of a driver and a vehicle speed and controls a swing angle of the swing member by the actuator to tilt the vehicle so that a tilt angle of the vehicle conforms to the target tilt angle.

In an automatic tilting vehicle, a lock device is provided which prevents swinging of the swing member by blocking a rotation of the actuator in a situation where the vehicle is stopped so that a tilt angle of the vehicle does not increase due to an action of the gravity on a vehicle body. The lock device is switched by the control unit between a lock position for preventing swinging of the swing member by the actuator and an unlock position for allowing swinging of the swing member by the actuator.

The lock device includes a lock holder integrally held by a rotary shaft of the actuator, a lock pin capable of reciprocating in a direction perpendicular to the swing axis, and a driving device reciprocating the lock pin. The lock holder has a plurality of teeth arranged equally spaced around the swing axis and extending radially. The driving device moves the lock pin between a lock position in which a tip end portion of the lock pin is positioned between two of the plurality of teeth and an unlock position in which the tip end portion of the lock pin is not positioned between two of the plurality of teeth.

When the automatic tilting vehicle finishes running, the lock device is switched from the unlock position to the lock position, and when the automatic tilting vehicle starts traveling, the lock device is switched from the lock position to the unlock position. It is necessary to confirm that the switching between the lock position and the unlock position is completed and it is preferable to confirm the completion of the switching as soon as possible. For that reason, when switching from the unlock position to the lock position, the lock pin is driven to move to the lock position and the actuator is rotationally driven in a preset direction, and when a rotation angle of the rotary shaft at that time is equal to or smaller than a reference value for the lock, it is determined that the switching has been completed.

However, when the automatic tilting vehicle is in a tilted state when the vehicle completes traveling, in a situation where the lock device is switched from the unlock position to the lock position, a tilt angle of the vehicle is increased by an action of the gravity, and accordingly, the rotary shaft of the actuator rotates. Consequently, when the rotary shaft of the actuator is rotated in the direction opposite to the rotation direction by the action of gravity when the lock device is switched from the unlock position to the lock position, it takes time to confirm the completion of the switching and the confirmation of the completion of the switching cannot be terminated promptly. Notably, a problem similar to this also occurs when the lock device is switched from the lock position to the unlock position. Furthermore, document JP 2012 081784 A discloses an automatic tilting vehicle according to the preamble of claim 1.

### SUMMARY

The present invention provides an automatic tilting vehicle having a vehicle tilting device that is improved so that a confirmation that a lock device has been switched from an unlock position to a lock position can be carried out more promptly as compared with the related art.

According to the present invention, an automatic tilting vehicle is provided which includes a pair of wheels that are laterally spaced and rotatably supported by corresponding wheel carriers, a vehicle tilting device that is configured to tilt the vehicle to the inner side of a turn at a time of turning of the vehicle, and a control unit that is configured to control the vehicle tilting device; the vehicle tilting device includes a swing member swinging about a swing axis extending in the longitudinal direction of the vehicle, an actuator that rotates a rotary shaft about the swing axis to swing the swing member about the swing axis, a pair of connecting rods that are pivotally attached to the swing member at upper end pivotal attachment portions and pivotally attached to the corresponding wheel carriers at lower end pivotal attachment portions on both lateral sides of the swing axis, and a lock device that is configured to selectively prevent the rotation of the rotary shaft.

The lock device includes a lock holder integrally held by the rotary shaft and having a plurality of teeth arranged around the swing axis, a lock pin capable of reciprocating in a direction transverse to the swinging axis, and a driving device for moving the lock pin between a lock position in which a tip portion of the lock pin is positioned between two of the plurality of teeth and an unlock position in which the tip portion of the lock pin is not positioned between two of the plurality of teeth.

The control unit is configured, when an ignition switch changes from ON to OFF, to move the lock pin from the unlock position to the lock position by the driving device and to rotate the rotary shaft by the actuator in a direction in which a tilt angle of the vehicle increases.

According to the above configuration, when the ignition switch changes from ON to OFF, the lock pin is moved from the unlock position to the lock position by the driving device, and the rotary shaft of the actuator is rotated in a direction in which the tilt angle of the vehicle increases. As a result, since the rotary shaft is rotated in the same direction as the rotation direction of the rotary shaft by an action of the gravity, as compared to where the rotary shaft is rotated in the direction opposite to the rotation direction of the rotary shaft by the action of the gravity, it is possible to promptly engage the tip end portion of the lock pin with a side surface of a tooth of the lock holder. Therefore, as compared to where the rotation axis of the actuator is rotated in a preset direction irrespective of the tilt angle of the vehicle when the ignition switch changes from ON to OFF, it is possible to more promptly confirm a completion of the switching to the lock position even when the vehicle is tilted in either direction to the left or right.

In one aspect of the present invention, the control unit is configured to gradually increase a force for rotating the rotary shaft and to determine that the lock pin has moved to the lock position when the rotation angle of the rotary shaft after the gradual increase of the force for rotating the rotary shaft is started is equal to or less than a first rotation angle reference value and a force for rotating the rotary shaft is equal to or higher than a first force reference value.

According to the above aspect, a force for rotating the rotary shaft is gradually increased, and when a rotation angle of the rotary shaft after the gradual increase of the force for rotating the rotary shaft is started is equal to or less than the first rotation angle reference value and a force for rotating the rotary shaft is equal to or higher than the first force reference value, it is determined that the lock pin has moved to the lock position. Therefore, the rotary shaft can be effectively rotated and the force for rotating the rotary shaft can be increased by the gradual increase to a value equal to or higher than the first force reference value so that it is possible to more promptly confirm the completion of switching to the lock position as compared to where a force for rotating the rotary shaft is not gradually increased.

In another aspect of the present invention, the control unit is configured, when an ignition switch changes from OFF to ON, to rotate the rotary shaft by the actuator in a direction in which a tilt angle of the vehicle decreases and to move the lock pin from the lock position to the unlock position by the driving device.

According to the above aspect, when the ignition switch changes from OFF to ON, the rotary shaft is rotated by the actuator in a direction in which the tilt angle of the vehicle decreases, and the lock pin is moved from the lock position to the unlock position by the driving device. Consequently, since the rotary shaft is rotated in the direction opposite to the rotating direction of the rotary shaft by the action of the gravity, as compared to where the rotary shaft is rotated in the same direction as the rotating direction of the rotary shaft by the action of the gravity, the tip end of the lock pin can quickly be detached from a side surface of a tooth of the lock holder. Therefore, it is possible to more promptly confirm the completion of the switching to the unlock position even when the vehicle is tilted in either direction to the left or right as compared to where the rotary shaft of the actuator is rotated in a preset direction regardless of the tilt angle of the vehicle when the ignition switch changes from OFF to ON.

In another aspect of the present invention, the control unit is configured to gradually increase a force for rotating the rotary shaft and to determine that the lock pin has moved to the unlock position when a force for rotating the rotary shaft is equal to or less than a second force reference value and a rotation angle of the rotary shaft after starting the rotation of the rotary shaft is larger than a second rotation angle reference value.

According to the above aspect, the force for rotating the rotary shaft is gradually increased, and it is determine that the lock pin has moved to the unlock position when the force for rotating the rotary shaft is equal to or less than the second force reference value and a rotation angle of the rotary shaft after starting the rotation of the rotary shaft is larger than a second rotation angle reference value. Therefore, since it is possible to effectively rotate the rotary shaft and to gradually increase the force for rotating the rotary shaft, it is possible to more promptly confirm the completion of the switching as compared to where the force for rotating the rotary shaft is not gradually increased. Notably, the second rotation angle reference value may be a value equal to or larger than the first rotation angle reference value.

In another aspect of the present invention, the lock pin includes a reciprocating member reciprocated by the driving device, an engaging member supported displaceably with respect to the reciprocating member along the reciprocating direction by the reciprocating member, and an elastic member that urges the engaging member in a direction away from the reciprocating member, and the engaging member is positioned between two of the plurality of teeth in the lock position and is not positioned between two of the plurality of teeth in the unlock position.

According to the above aspect, the lock pin includes a reciprocating member reciprocated by the driving device, an engaging member supported displaceably with respect to the reciprocating member along the reciprocating direction by the reciprocating member, and an elastic member that urges the engaging member in a direction away from the reciprocating member. Therefore, even in a situation where the engaging member is aligned with a tooth of the lock holder, the driving device can move the reciprocating member in a direction toward the lock holder. Consequently, by rotating the rotary shaft of the actuator to rotate the lock holder, the engaging member can be quickly positioned between two teeth, and the lock device can be promptly switched to the lock position.

Other objects, other features and attendant advantages of the present invention will be readily understood from the description of the embodiments of the present invention described with reference to the following drawings. It is to be noted that in the present application, "front-rear direction" or "longitudinal direction" and "lateral direction" are the front-rear direction of the vehicle and the lateral direction of the vehicle, respectively, and "front" and "rear" are front and rear in the front-rear direction of the vehicle, respectively.

### BRIEF DESCRIPTION OF THE DRAWINGS

FIG. 1 is a rear view showing an automatic tilting vehicle according to an embodiment of the present invention.
FIG. 2 is a side view showing the automatic tilting vehicle of the embodiment as seen from the left side of the vehicle.
FIG. 3 is an enlarged front view of a lock device of the embodiment as viewed along an axis of an actuator.
FIG. 4 is an enlarged partial view showing the lock device in a situation in which it is in an unlock position.
FIG. 5 is an enlarged partial view showing the lock device in a situation in which a reciprocating member has been moved to an operating position and an engaging member has moved into a groove between teeth.
FIG. 6 is an enlarged partial view showing the lock device in a situation in which the reciprocating member has been moved to the operating position but the engaging member is engaged with a radially outer surface of a tooth.
FIG. 7 is a flowchart showing a control routine for locking the actuator.
FIG. 8 is a flowchart showing a control routine for unlocking the actuator.
FIG. 9 is an enlarged partial view showing the lock device in a situation in which the reciprocating member has been moved to the operating position and the engaging member is engaged with a side of a tooth in a groove between teeth.
FIG. 10 is an enlarged partial view showing the lock device in a situation in which the reciprocating member has been moved to the operating position and the engaging member is engaged with a side of another tooth in the groove between the teeth.

### DETAILED DESCRIPTION

The embodiment of the present invention will now be described in detail with reference to the accompanying drawings.

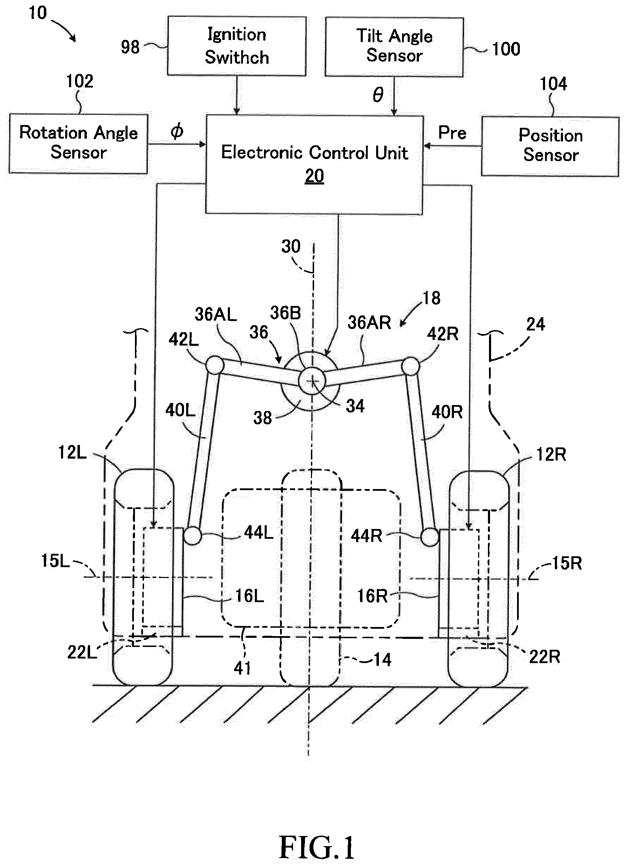

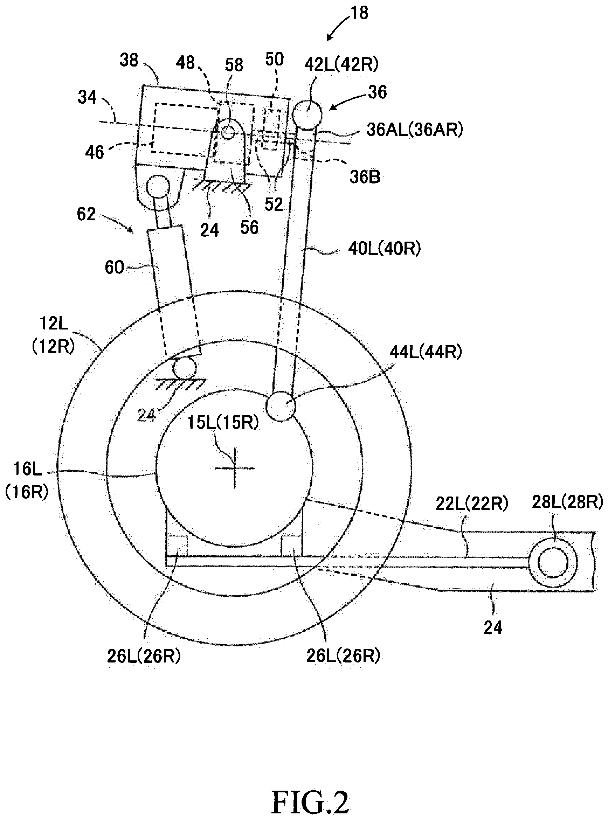

In FIGS. 1 and 2, an automatic tilting vehicle 10 according to the embodiment of the present disclosure is a three-wheeled vehicle that includes a pair of front wheels 12L and 12R which are non-steered driving wheels, and a single rear wheel 14 which is a steered driven wheel. The front wheels 12L and 12R are spaced apart from each other in the lateral direction and are rotatably supported by corresponding wheel carriers 16L and 16R about rotational axes 15L and 15R, respectively. The automatic tilting vehicle 10 further includes a vehicle tilting device 18 and an electronic control unit 20. It should be noted that the rear wheel 14 may be a steered driving wheel or two wheels having a smaller tread than the front wheels.

In the embodiment, the camber of the front wheels 12L and 12R is a neutral camber, but may be a negative camber or a positive camber. The rear wheel 14 is positioned rearwardly with respect to the front wheels. Although not shown in the figures, the rear wheel 14 is supported by a rear wheel suspension so as to be vertically displaceable with respect to a vehicle body 24 and to restrict lateral displacement and inclination with respect to the vehicle body 24. Further, the rear wheel 14 is steered in a steer-by-wire manner by a steering device being controlled by the electronic control unit 20 in accordance with an operation amount of a steering wheel by a driver.

Although not shown in the figures, in the illustrated embodiment, the wheel carriers 16L and 16R incorporate in-wheel motors 17L and 17R, respectively, as driving devices and each function as a housing of the corresponding in-wheel motor. Rotational direction and an output of the in-wheel motors are controlled by the electronic control unit 20 in accordance with the operations of a shift lever and an accelerator pedal (neither shown) by the driver. Braking forces of the front wheels 12L and 12R and the rear wheel 14 are controlled by the electronic control unit 20 controlling a braking device which is not shown in the figures but operates in accordance with an operation of a brake pedal by the driver.

The wheel carriers 16L and 16R are supported by the corresponding suspension arms 22L and 22R so as to be vertically displaceable with respect to the vehicle body 24 and to restrict the lateral displacement and inclination with respect to the vehicle body 24. The illustrated suspension arms 22L and 22R are leading arms that are integrally connected to the wheel carriers 16L and 16R at the front ends by a pair of joints 26L and 26R, respectively, and are connected to the vehicle body 24 by joints 28L and 28R, respectively at the rear ends.

The pair of joints 26L and 26R may be joints, for example, rubber bushing devices that are spaced apart in the longitudinal direction and have axes extending substantially in the vertical direction. The joints 28L and 28R may be joints, for example, rubber bushing devices having axes extending substantially in the lateral direction. As long as the above-described requirements regarding the wheel carriers 16L and 16R are satisfied, the suspension arms 22L and 22R may be other arms such as trailing arms or combinations of an upper arm and a lower arm.

The vehicle tilting device 18 includes a swing member 36 that swings about a swing axis 34 extending in the front-rear direction and slightly inclined rearward, an actuator 38 that swings the tilting member 36 about the swing axis 34, and a pair of connecting rods 40L and 40R. In FIG. 1, for convenience of explanation, the electronic control unit 20 is illustrated above the vehicle tilting device 18, but it may be housed in an internal structure 41 provided between the front wheels 12L and 12R.

The connecting rods 40L and 40R extend substantially in the vertical direction on both sides transversely to the swing axis 34 and are pivotally connected at the upper ends to the corresponding outer ends of the swing member 36 by joints 42L and 42R. The joints 42L and 42R are preferably joints each including a pivot pin with a rubber bush having an axis substantially extending in the longitudinal direction of the vehicle, but may be joints such as ball joints. The illustrated connecting rods 40L and 40R are straight, but may be at least partially curved.

Further, the connecting rods 40L and 40R are pivotally connected at the lower ends to the wheel carriers 16L and 16R by joints 44L and 44R, respectively such as ball joints. A lateral distance between the centers of the joints 44L and 44R is greater than a lateral distance between the centers of the joints 42L and 42R. Note that when a pair of auxiliary arms extending in the vertical direction are provided and lower ends of the auxiliary arms are fixed to the corresponding suspension arms 22L and 22R, the connecting rods 40L and 40R may be pivotally connected to the upper ends of the corresponding auxiliary arms. In that case, the lower ends of the connecting rods 40L, 40R are integrally connected to the wheel carriers 16L, 16R via the corresponding auxiliary arms and the suspension arms 22L, 22R.

The swing member 36 has a boss portion 36B rotatable about the swing axis 34 and arm portions 36AL and 36AR integrally formed with the boss portion 36B and extending in opposite directions from the boss portion 36B, and functions as a swing arm member capable of swinging about the swing axis 34. The effective lengths of the arm portions 36AL and 36AR, that is, a distance between the axis 34 and the center of the joint 42L and a distance between the axis 34 and the center of the joint 42R are the same.

As shown in FIG. 2, the actuator 38 is a rotary electric actuator which has, for example, a harmonic drive (registered trademark) including an electric motor such as a DC brushless motor and a reduction gear 48 and a lock device 50. An output rotary shaft 52 of the reduction gear 48 protrudes rearward and the boss portion 36B is fixedly attached to the tip of the output rotary shaft 52 so that the rotary motion of the electric motor 46 is decelerated by the reduction gear 48 and is transmitted as a swing motion to the swing member 36. As will be described in detail later, the lock device 50 locks and unlocks the actuator 38.

As shown in FIG. 2, the actuator 38 is arranged between a pair of brackets 46 laterally spaced and fixed to the vehicle body 24. The actuator 38 has a pair of pivot shafts 58 protruding laterally away from each other and is pivotally supported about the pivot shafts 58 as the shafts 58 are rotatably supported by the brackets 56. A shock absorber 60 and a suspension spring (not shown) are interposed between a front end portion of the actuator 38 and the vehicle body 24 below the front end portion. Therefore, the actuator 38 is connected to the vehicle body via the shock absorber 60 and the suspension spring, not shown, so that the actuator 38 can be displaced in the vertical direction with respect to the vehicle body 24 and the displacement and inclination in the lateral direction with respect to the vehicle body are restricted but the actuator can vertically displaceable with respect to the vehicle body 24 at the front end and rear end portions. It should be noted that the suspension spring may be an elastic member such as a compression coil spring.

The shock absorber 60 and the suspension spring cooperate with the suspension arms 22L and 22R and the like to constitute a front wheel suspension 62. The front wheels 12L, 12R and the vehicle tilting device 18 are suspended from the vehicle body 24 by the front wheel suspension 62 so that they are capable of relatively displacing in the vertical direction with respect to the vehicle body 24, but lateral displacement and inclination with respect to the vehicle body are restricted. A relative vertical vibration between the front wheels 12L and 12R and the vehicle body 24 generated when the vehicle travels is damped by the shock absorber 60 and the impact of the front wheels 12L and 12R received from a road surface and transmitted to the vehicle body 24 is attenuated by a suspension spring, not shown in the figures.

The actuator 38 receives a downward force via the pair of brackets 56 due to the gravity acting on the vehicle body 24. However, since the actuator 38 is prevented from being displaced downward by the vehicle tilting device 18, the actuator swings about the pivot shafts 58 so that the rear portion is displaced upward with respect to the vehicle body 24 and the front portion is displaced downward with respect to the vehicle body 24. Therefore, since the suspension spring is compressively deformed, a weight of the vehicle body 24 is supported by a spring force by compression deformation of the suspension spring. An amount of compressive deformation of the suspension spring increases when the front wheels 12L and 12R bounce and the rear portion of the actuator 38 is displaced upward, and conversely decreases when the front wheel rebounds and the rear portion of the actuator 38 is displaced downward.

Although not shown in the figures, when the swing member 36 swings about the swing axis 34, the connecting rods 40L and 40R move up and down in opposite directions, whereby the front wheels 12L and 12R move up and down in opposite directions with respect to the vehicle body 24, which tilts the vehicle 10 in the lateral direction. In particular, the swing member 36 swings so that the connecting rod on the turning inner side rises and the connecting rod on the turning outer side moves downward, whereby the vehicle 10 is inclined toward the inner side of the turning.

A tilt angle of the vehicle 10 is controlled by the actuator 38 of the vehicle tilting device 18 being controlled by the electronic control unit 20. The electronic control unit 20 calculates an estimated lateral acceleration of the vehicle based on a steering angle equal to a rotation angle of a steering wheel (not shown) and a vehicle speed, and calculates a target tilt angle for stably turning the vehicle 10 based on the estimated lateral acceleration. Further, the electronic control unit 20 calculates a target rotation angle of the electric motor of the actuator 38 based on the target tilt angle, and controls the electric motor so that a rotation angle of the electric motor becomes the target rotation angle. Further, the electronic control unit 20 calculates a target steered angle of the rear wheel 14 based on a steering angle and a vehicle speed, and steers the rear wheels 14 in a steer-by-wire manner by controlling a steering actuator, not shown in the figures, so that the steered angle of the rear wheel becomes the target steered angle.

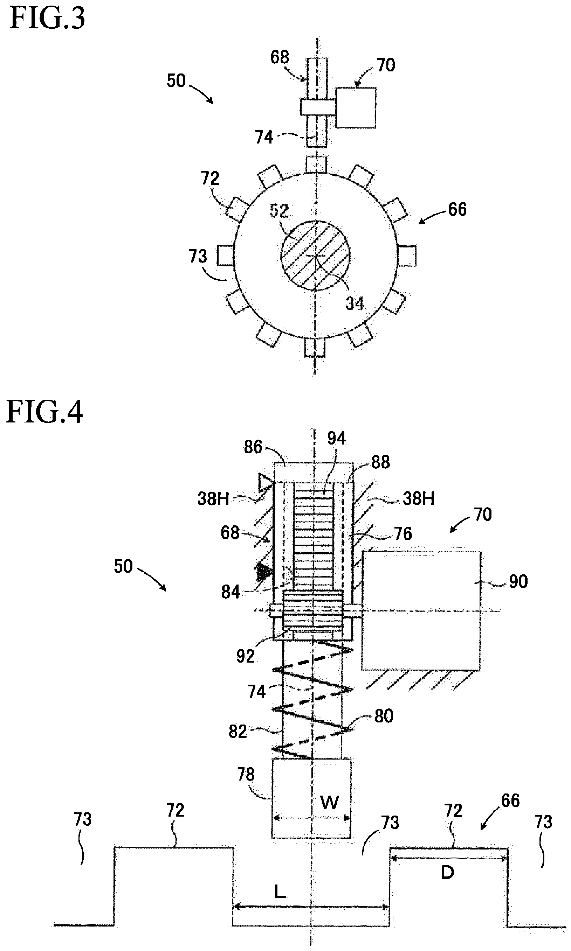

As shown in FIG. 3, the lock device 50 includes a lock holder 66 integrally held by the output rotary shaft 52, a lock pin 68 capable of reciprocating in a direction perpendicular to the swing axis 34, and a driving device 70 for reciprocating the lock pin 68. The lock holder 66 has a plurality of teeth 72 which are arranged equally spaced around the pivot axis 34 and extend radially. Two adjacent teeth 72 cooperate with each other to form a groove portion 73.

As shown in FIG. 4, the lock pin 68 includes a reciprocating member 76 supported by the housing 38H of the actuator 38 so as to reciprocate along an axis 74, an engaging member 78, and a compression coil spring 80 elastically mounted between the reciprocating member 76 and the engaging member 78. The engaging member 78 functions as a tip end portion of the lock pin 68 and the compression coil spring 80 functions as an elastic member that urges the engaging member 78 in a direction away from the reciprocating member 76. The direction of the axis 74 and thus of the reciprocation of the lock pin 68 is perpendicular to the swing axis 34, but may be a direction transverse to the swing axis 34 and not necessarily in a direction perpendicular to the swing axis 34. In FIG. 4 and FIGS. 5, 6, 9 and 10 described later, for the purpose of explanation, the lock holder 66 is deformed so that a plurality of teeth 72 are linearly arranged.

The engaging member 78 has a guide rod 82 which is reciprocally fitted in a guide hole 84 provided in the reciprocating member 76 and extending along the axis 74. Thus, the engaging member 78 can reciprocate along the axis 74 with respect to the reciprocating member 76, but cannot move relative to the reciprocating member 76 in a direction transverse to the axis 74. A stopper 86 is provided at the tip end (the upper end as viewed in FIG. 4) of the guide rod 82. The stopper 86 engages with a stopper 88 provided on the reciprocating member 76 to prevent a distance between the reciprocating member 76 and the engaging member 78 from increasing beyond a preset value.

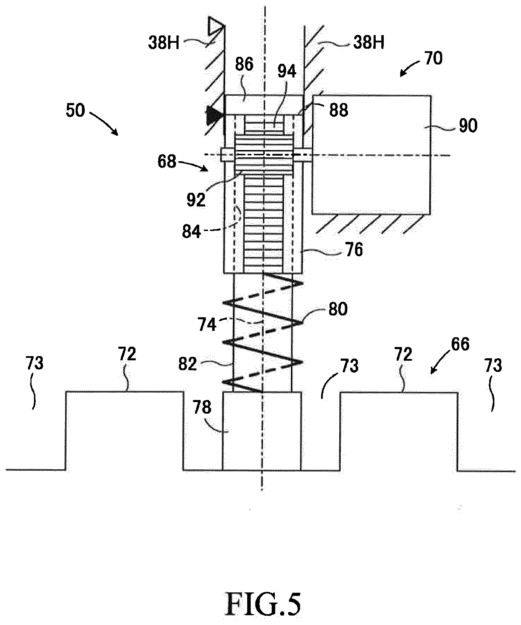

The driving device 70 includes an electric motor 90, and a pinion 92 is provided on a rotary shaft of the electric motor 90. The pinion 92 meshes with rack teeth 94 provided on the reciprocating member 76 along the axis 74. The electric motor 90 is controlled by the electronic control unit 20 and rotates the pinion 92 so that the reciprocating member 76 can reciprocate between a non-operating position shown in FIG. 4 and an operating position shown in FIG. 5. Although the pinion 92 and the rack teeth 94 are flat teeth, they may be helical teeth.

As shown in FIG. 4, when the reciprocating member 76 is in the non-operating position, the engaging member 78, which is the tip portion of the lock pin 68, is not positioned in a groove portion 73 between two teeth 72. On the other hand, as shown in FIG. 5, when the reciprocating member 76 is in the operating position, the engaging member 78 can be positioned in a groove portion 73 between two teeth 72. Therefore, the driving device 70 moves the lock pin 68 between a lock position in which the engaging member 78 is positioned in a groove portion 73 and prevents the rotation of the output rotary shaft 52, and an unlock position in which the engaging member 78 is not positioned in a groove portion 73 and allows the rotation of the output rotary shaft 52. It is to be noted that in FIG. 4 and the like, the positions of the upper end of the reciprocating members 76 when in the operating position and a non-operating position are indicated by white and black triangles, respectively.

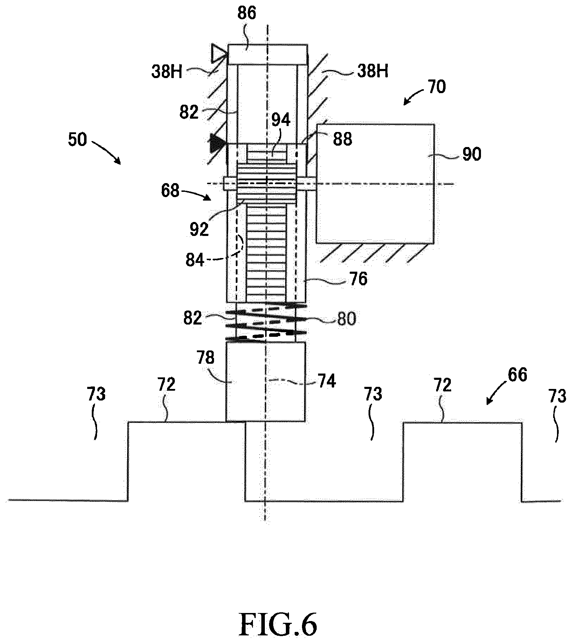

As shown in FIG. 4, a circumferential interval at roots of two teeth 72, that is, a circumferential width L of a groove portion 73 is larger than a circumferential width W of the engaging member 78. In the embodiment, a circumferential width D at the tip of each tooth 72 is greater than the circumferential width W of the engagement member 78, but may be equal to or less than the width W. As shown in FIG. 5, when the reciprocating member 76 is driven to the operating position when the lock pin 68 is aligned with a groove portion 73 between two teeth 72, the engaging member 78 is positioned in the groove portion 73. In contrast, as shown in FIG. 6, when the lock pin 68 is not aligned with a groove portion 73 (at least partially aligned with a tooth 72), even if the reciprocating member 76 is driven to the operating position, the engaging member 78 is not positioned in the groove portion 73 but engages with a radially outer surface of the tooth 72.

As shown in FIG. 1, a signal indicating whether an ignition switch 98 is ON or not is input from the ignition switch to the electronic control unit 20. The electronic control unit 20 includes a relay circuit so that a power supply to the electronic control unit 20 is continued until it is determined that the locking of the actuator 38 by the lock device 50 is completed even if the ignition switch 98 is switched from ON to OFF.

A tilt angle θ of the vehicle 10 is detected by a tilt angle sensor 100, and a signal indicating a tilt angle θ of the vehicle is input to the electronic control unit 20. The tilt angle θ becomes zero when the swing angle of the swing member 36 is zero and a center plane 30 of the vehicle 10 coincides with the vertical direction, and becomes a positive value when the vehicle 10 is tilted to the left. Furthermore, since the tilt angle θ of the vehicle 10 is substantially the same as a roll angle (not shown) of the vehicle body 24, a roll angle of the vehicle body may be detected as a tilt angle θ of the vehicle 10 by a roll angle sensor.

The motor 46 of the actuator 38 is provided with a rotation angle sensor 102 such as a rotary encoder for detecting a rotation angle ϕ of the motor, and a signal indicating the rotation angle ϕ is input to the electronic control unit 20. Furthermore, the lock device 50 is provided with a position sensor 104 for detecting a position Pre of the reciprocating member 76 of the lock pin 68, and a signal indicating the position of the reciprocating member 76 is input to the electronic control unit 20.

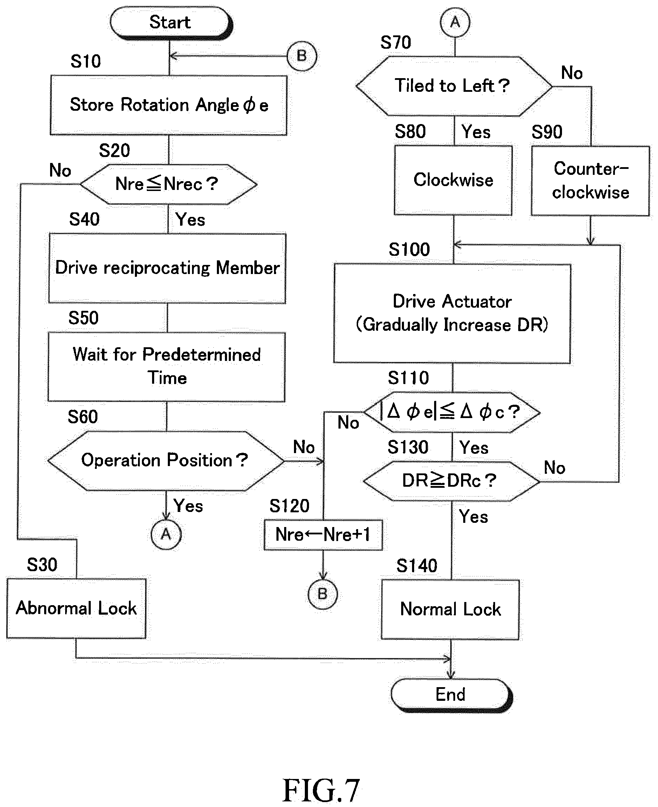

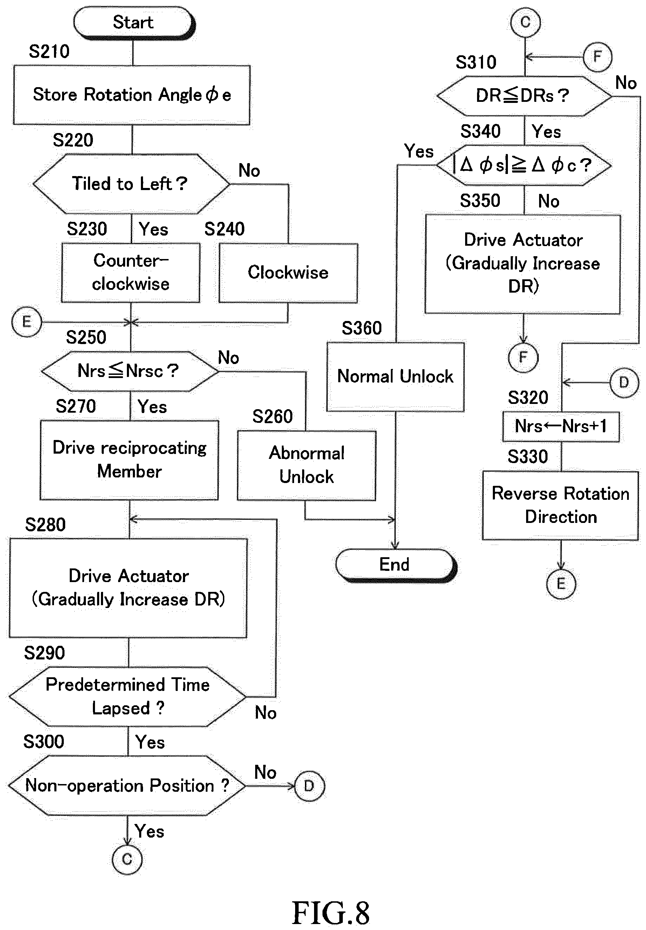

When the ignition switch 98 is switched from ON to OFF, the electronic control unit 20 controls the locking of the actuator 38 by the lock device 50 according to the flowchart shown in FIG. 7. On the other hand, when the ignition switch 98 is switched from OFF to ON, the electronic control unit 20 controls the unlocking of the actuator 38 by the lock device 50 according to the flowchart shown in FIG. 8.

The electronic control unit 20 may be a microcomputer having, for example, a CPU, a ROM, a RAM, and an input/output port device, which are connected to each other by a bi-directional common bus. The control programs corresponding to the flowcharts shown in FIGS. 7 and 8 are stored in the ROM, and the locking and unlocking of the actuator 38 are controlled by the CPU according to the control programs.

### < Control of Locking>

Next, control of locking of the actuator 38 will be described with reference to the flowchart shown in FIG. 7. The control of locking according to the flowchart shown in FIG. 7 is started when the ignition switch 98 is switched from ON to OFF and repeatedly executed at predetermined time intervals.

First, in step 10, a rotation angle ϕ of the electric motor 46 of the actuator 38 detected by the rotation angle sensor 102 is stored in the RAM of the electronic control unit 20 as a rotation angle cpe at the start of locking.

In step 20, it is determined whether or not a retry count Nre of the locking counted up in step 120 described below is equal to or less than a reference value Nrec (a positive constant). When an affirmative determination is made, the control of the locking proceeds to step 40, and when a negative determination is made, the control of locking proceeds to step 30.

In step 30, it is determined that the actuator 38 has not been locked and is abnormal. Although not shown in the figures, a visual alarm and/or an audible alarm indicating that the locking of the actuator 38 is abnormal may be issued for a predetermined period of time.

In step 40, the reciprocating member 76 is driven by the driving device 70 so that the reciprocating member 76 moves to the operating position, and after waiting for a predetermined time for locking in step 50, the control of locking proceeds to step 60.

In step 60, based on a position Pre of the reciprocating member 76 detected by the position sensor 104, it is determined whether or not the reciprocating member 76 has moved to the operating position. When a negative determination is made, the control of locking proceeds to step 120, and when an affirmative determination is made, the control of locking proceeds to step 70.

In step 70, based on a tilt angle θ of the vehicle 10 detected by the tilt angle sensor 100, it is determined whether or not the vehicle 10 is tilted to the left and if the actuator 38 is not locked, the tilt angle of the vehicle 10 to the left increases. When an affirmative determination is made, in step 80, the direction of rotation of the actuator 38 is set in the clockwise direction as seen in FIGS. 1 and 3. On the other hand, when a negative determination is made, in step 90, the direction of rotation of the actuator 38 is set in the counterclockwise direction as viewed in FIGS. 1 and 3.

In step 100, the electric motor 46 is driven so that the actuator 38 rotates in the direction set in step 80 or 90. A duty ratio DR of drive current supplied to the electric motor 46 is gradually increased so that a force for rotating the output rotary shaft 52 of the actuator 38 and a rotation speed of the output rotary shaft 52 are gradually increased.

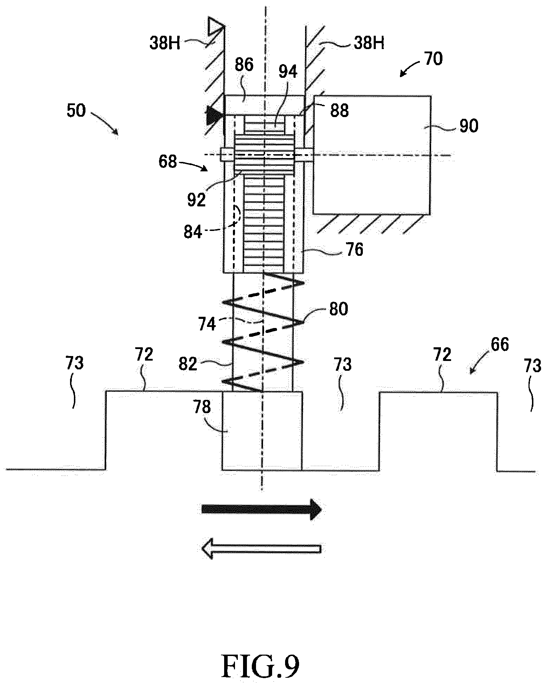

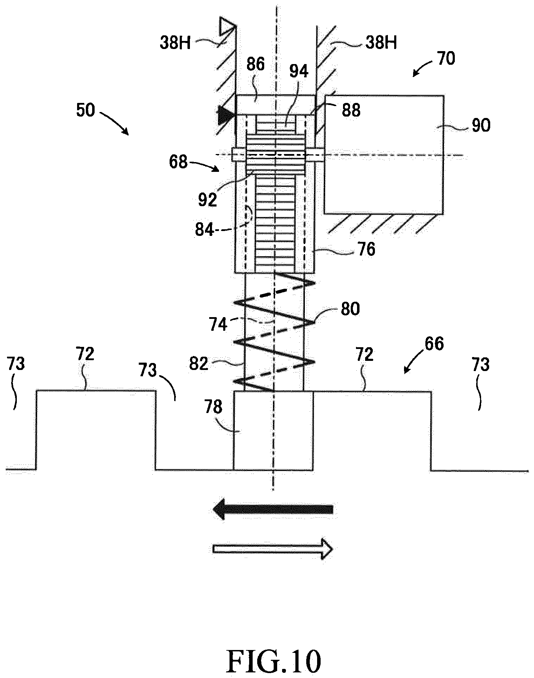

For example, when the set rotation direction of the actuator 38 is the clockwise direction, the electric motor 46 is driven so that the lock holder 66 moves in the direction indicated by the black arrow in FIG. 9 with respect to the lock pin 68. Conversely, when the set rotation direction of the actuator 38 is the counterclockwise direction, the electric motor 46 is driven so that the lock holder 66 moves in the direction indicated by the black arrow in FIG. 10 with respect to the lock pin 68.

In step 110, it is determined whether or not an absolute value of the difference Δϕe (=ϕ - ϕe) between a current rotation angle ϕ of the electric motor 46 and the rotation angle cpe at the start of locking is equal to or less than a reference value Δϕc. When an affirmative determination is made, the control of locking proceeds to step 130, and when a negative determination is made, the retry counts Nre of the locking is incremented by 1 in step 120, and thereafter the control of locking returns to step 10. The reference value Δϕc is the maximum angle (a positive constant) by which the output rotary shaft 52 of the actuator 38 can rotate in a situation where the engaging member 78 is in a groove portion 73 between two teeth 72.

In step 130, it is determined whether or not the duty ratio DR of the drive current supplied to the electric motor 46 is greater than or equal to a reference value DRc (a positive constant). When a negative determination is made, the control of locking returns to step 100, and when an affirmative determination is made, the control of locking proceeds to step 140.

In step 140, a determination is made that the locking of the actuator 38 is normally completed. Although not shown in the figures, a visual signal and/or an auditory signal indicating that the locking of the actuator 38 is normally completed may be output for a predetermined period of time.

As can be understood from the above explanations, in the locking control of the embodiment, the reciprocating member 76 is moved to the operating position by executing steps 10 to 60 until an affirmative determination is made in step 60. When the reciprocating member 76 moves to the operation position, steps 100 to 130 are executed until an affirmative determination is made in step 130, so that the output rotary shaft 52 of the actuator 38 is rotationally driven in a direction in which an increase in the tilt angle θ of the vehicle 10 is promoted.

Thus, according to the control of locking of the embodiment, the output rotary shaft 52 and the lock holder 66 of the lock device 50 can be rotated in the direction in which a magnitude of the tilt angle θ of the vehicle 10 is increased by an action of the gravity in a state where the reciprocating member 76 is in the operating position. Accordingly, the engaging member 78 of the lock pin 68 can be engaged with a side surface of a tooth 72 of the lock holder 66 earlier than when a magnitude of the tilt angle θ of the vehicle 10 is increased and the output rotary shaft 52 and the lock holder 66 are rotated by an action of the gravity. In other words, it is possible to quickly complete the locking of the actuator 38 at the end of traveling of the vehicle 10, compared with a case where the locking control of the embodiment is not performed, which enables to early confirm the completion of the locking.

Furthermore, according to the locking control of the embodiment, when an absolute value of the difference Δϕe in the rotational angle of the electric motor 46 is equal to or smaller than the reference value Δϕc and a duty ratio DR of the drive current supplied to the motor 46 is equal to or larger than the reference value DRc, it is determined that locking of the actuator 38 is completed. Therefore, it is possible to effectively rotate the output rotary shaft 52, and the force rotating the output rotary shaft can be increased more than the first force reference value by gradual increase thereof, so that the completion of switching to the lock position can promptly be confirmed as compared to where a force rotating the output rotary shaft is not gradually increased.

Notably, when a tilt angle θ of the vehicle 10 is small and it cannot be determined that the vehicle is tilted to the left, a negative determination is made in step 70. Therefore, also in this situation, the output rotary shaft 52 of the actuator 38 can be positively rotated.

### < Control of Unlocking>

Next, control of unlocking of the actuator 38 will be described with reference to the flowchart shown in FIG. 8. The control of unlocking according to the flowchart shown in FIG. 8 is started when the ignition switch 98 is switched from OFF to ON and repeatedly executed at predetermined time intervals.

First, in step 210, a rotation angle ϕ of the electric motor 46 of the actuator 38 detected by the rotation angle sensor 102 is stored in the RAM of the electronic control unit 20 as a rotation angle ϕs at the start of unlocking.

In step 220, based on a tilt angle θ of the vehicle 10 detected by the tilt angle sensor 100, it is determined whether or not the vehicle 10 is inclined to the left, and whether or not the tilt angle of the vehicle 10 to the left increases if the actuator 38 is unlocked. When an affirmative determination is made, in step 230, the direction of rotation of the actuator 38 is set in the counterclockwise as viewed in FIGS. 1 and 3. On the other hand, when a negative determination is made, in step 240, the direction of rotation of the actuator 38 is set in the clockwise direction as viewed in FIGS. 1 and 3.

In step 250, it is determined whether or not a retry count Nrs of the unlocking counted up in step 320 described below is equal to or less than a reference value Nrsc (a positive constant). When an affirmative determination is made, control of unlocking proceeds to step 270, and when a negative determination is made, control of unlocking proceeds to step 260.

In step 260, it is determined that the actuator 38 has not been unlocked and is abnormal. Although not shown in the figures, a visual alarm and/or an audible alarm indicating that the unlocking of the actuator 38 is abnormal may be issued over a predetermined period of time.

In step 270, after the reciprocating member 76 is driven by the driving device 70 so that the reciprocating member 76 moves to the non-operating position, the control of unlocking proceeds to step 280.

In step 280, the electric motor 46 is driven so that the actuator 38 rotates in the direction set in step 230 or 240. The duty ratio DR of the drive current supplied to the electric motor 46 is gradually increased so that a force for rotating the output rotary shaft 52 of the actuator 38 and a rotation speed of the output rotary shaft 52 are gradually increased.

For example, when the set rotation direction of the actuator 38 is the counterclockwise direction, the electric motor 46 is driven so that the lock holder 66 moves in the direction indicated by the white arrow in FIG. 9 with respect to the lock pin 68. Conversely, when the set rotation direction of the actuator 38 is the clockwise direction, the electric motor 46 is driven so that the lock holder 66 moves in the direction indicated by the white arrow in FIG. 10 with respect to the lock pin 68.

In step 290, it is determined whether or not a predetermined standby time for unlocking has elapsed. When a negative determination is made, the control of unlocking returns to step 280, and when an affirmative determination is made, the control of the unlocking proceeds to step 300.

In step 300, based on a position Pre of the reciprocating member 76 detected by the position sensor 104, it is determined whether or not the reciprocating member 76 has moved to the non-operating position. When a negative determination is made, the control of the unlocking proceeds to step 320, and when an affirmative determination is made, the control of the unlocking proceeds to step 310.

In step 310, it is determined whether or not the duty ratio DR of drive current supplied to the electric motor 46 is equal to or less than a reference value DRs (a positive constant). When an affirmative determination is made, the control of the unlocking proceeds to step 340, and when a negative determination is made, the control of the unlocking proceeds to step 320.

In step 320, the retry count Nrs for unlocking is incremented by 1, and in step 330, the drive direction of the actuator 38 (the direction of rotation of the output rotary shaft 52) is reversed, after which the control of unlocking returns to step 250.

In step 340, it is determined whether or not an absolute value of the difference Δϕs (=ϕ - ϕ s) between a current rotation angle ϕ of the electric motor 46 and the rotation angle ϕs at the start of unlocking is larger than the reference value Δϕc. When an affirmative determination is made, the control of the unlocking proceeds to step 360, and when a negative determination is made, the control of the unlocking proceeds to step 350. Note that step 340 may be executed before step 310.

In step 350, as in step 280, the electric motor 46 is driven so that the actuator 38 rotates in the direction set in step 230 or 240. In this case as well, the duty ratio DR of the drive current supplied to the motor 46 is gradually increased, so that a force for rotating the output rotary shaft 52 of the actuator 38 and a rotation speed of the output rotary shaft 52 are gradually increased.

In step 360, a determination is made that the unlocking of the actuator 38 has normally been completed. Although not shown in the figures, a visual signal and/or an auditory signal indicating that the unlocking of the actuator 38 has been normally completed may be output over a predetermined period of time.

As can be understood from the above explanations, in the unlocking control of the embodiment, steps 320 and 330 and steps 250 to 300 are executed until an affirmative determination is made in step 300. That is, the output rotary shaft 52 of the actuator 38 is rotationally driven in a direction opposite to the direction of change of the tilt angle θ of the vehicle 10 due to the action of the gravity, whereby the state in which the engaging member 78 of the lock pin 68 is engaged with a side surface of a tooth 72 of the lock holder 66 is released and the reciprocating member 76 is moved to the non-operating position.

When the reciprocating member 76 has moved to the non-operating position, steps 310 to 340 are executed until an affirmative determination is made in step 340, whereby the output rotary shaft 52 of the actuator 38 is further rotationally driven in a direction opposite to the change direction of the tilt angle θ of the vehicle 10 due to the action of the gravity. When an absolute value of the difference Δϕs between a current rotation angle ϕ of the electric motor 46 and the rotation angle ϕs at the start of unlocking becomes larger than the reference value Δϕc, an affirmative determination is made in step 340 and a determination is made in step 360 that the unlocking of the actuator 38 has normally been completed.

Thus, according to the unlocking control of the embodiment, the output rotary shaft 52 and the lock holder 66 of the lock device 50 can positively be rotated in a direction opposite to the change direction of the tilt angle θ of the vehicle 10 by the action of the gravity in a state where the reciprocating member 76 is in the operating position. Accordingly, even in a situation where the vehicle 10 is tilted and the engaging member 78 of the lock pin 68 is pressed against a side face of a tooth 72 of the lock holder 66 by the action of the gravity, the engaging member 78 can positively be withdrawn from the side of the tooth 72. In other words, the unlocking of the actuator 38 at the start of traveling of the vehicle 10 can be completed earlier and more surely than when the unlocking control of the embodiment is not performed.

Further, according to the unlocking control of the embodiment, when the duty ratio DR of the drive current supplied to the electric motor 46 is equal to or less than the reference value DRs and an absolute value of the difference Δϕs in the rotational angle of the electric motor 46 is larger than the reference value Δϕc, it is determined that the unlocking of the actuator 38 is completed. Therefore, it is possible to effectively rotate the output rotary shaft 52, and the force rotating the output rotary shaft can be increased by gradual increase thereof, so that the completion of switching to the unlock position can promptly be confirmed as compared to where a force rotating the output rotary shaft is not gradually increased.

Notably, when the tilt angle θ of the vehicle 10 is small and it cannot be determined that the vehicle is tilted to the left, a negative determination is made in step 220. Therefore, also in this situation, the output rotary shaft 52 of the actuator 38 can be positively rotated.

Although the present invention has been described in detail with reference to a specific embodiment, it will be apparent to those skilled in the art that the present invention is not limited to the above-described embodiments, and various other embodiments are possible within the scope of the present invention.

For example, in the above-described embodiment, the lock device 50 is provided on the output rotary shaft 52 between the reduction gear device 48 and the boss portion 36B of the swing member 36. However, the lock device 50 may be provided on a rotary shaft of the electric motor 46.

In the above embodiment, a tilt angle of the vehicle 10 is detected by a tilt angle sensor used for controlling the tilt angle of the vehicle. However, a tilt angle of the vehicle used for controlling the lock device 50 may be detected by a device other than the tilt angle sensor used for controlling the tilt angle of the vehicle.

In the above embodiment, the actuator 38 is supported so as to be swingable about the pair of pivot shaft 48 provided at the center portion in the longitudinal direction thereof by means of the pivot shafts 48 being supported by the pair of brackets 46. The output rotary shaft of the actuator 38 protrudes rearward and the boss portion 36B of the swing member 36 is integrally attached to the tip of the output rotary shaft. However, the vehicle tilting device 18 may have any an arbitrary configuration as long as the connecting rods 40L and 40R can be vertically moved in opposite phases by rotating the output rotary shaft 52 to swing the swinging member 36 about the swinging axis 34 extending in the longitudinal direction.

For example, the arm portions 36AL and 36AR of the swing member 36 are V-shaped so as to have a height that increases with distance from the boss portion 36B. However, the arm portions 36AL and 36AR may be formed in a straight line without being inclined with respect to each other and may extend horizontally when the vehicle 10 is in the standard state, or the arm portions 36AL and 36AR may have an inverted V shape so that the heights decrease as the distances from the boss portion 36B increase.

An automatic tilting vehicle which includes left and right wheels supported by wheel carriers, a vehicle tilting device and a control unit. The vehicle tilting device includes a swing member, an actuator that swings the swing member, a pair of connecting rods that are pivotally attached to the swing member and the wheel carriers, and a lock device that is configured to selectively prevent the swing of the actuator. The control unit is configured, when an ignition switch changes from ON to OFF, to switch the lock device from an unlock position to a lock position and to rotate the swing member by the actuator in a direction in which a tilt angle of the vehicle increases.

## Claims

1. An automatic tilting vehicle (10) which includes a pair of wheels (12L, 12R) that are laterally spaced and rotatably supported by corresponding wheel carriers (16L, 16R), a vehicle tilting device (18) that is configured to tilt the vehicle to the inner side of a turn at a time of turning of the vehicle, and a control unit (20) that is configured to control the vehicle tilting device; the vehicle tilting device includes a swing member (36) swinging about a swing axis (34) extending in the longitudinal direction of the vehicle, an actuator (38) that rotates a rotary shaft (52) about the swing axis to swing the swing member about the swing axis, a pair of connecting rods (40L, 40R) that are pivotally attached to the swing member at upper end pivotal attachment portions and pivotally attached to the corresponding wheel carriers at lower end pivotal attachment portions on both lateral sides of the swing axis, and a lock device (50) that is configured to selectively prevent the rotation of the rotary shaft (52), **characterized in that**
the lock device (50) includes a lock holder (66) integrally held by the rotary shaft and having a plurality of teeth (72) arranged around the swing axis, a lock pin (68) capable of reciprocating in a direction transverse to the swinging axis, and a driving device (70) for moving the lock pin between a lock position in which a tip portion of the lock pin is positioned between two of the plurality of teeth and an unlock position in which the tip portion of the lock pin is not positioned between two of the plurality of teeth, and
**characterized in that**
the control unit (20) is configured, when an ignition switch (98) changes from ON to OFF, to move the lock pin (68) from the unlock position to the lock position by the driving device (70) and to rotate the rotary shaft (52) by the actuator (38) in a direction in which a tilt angle (θ) of the vehicle increases.

2. The automatic tilting vehicle (10) according to claim 1, **characterized in that** the control unit (20) is configured to gradually increase a force for rotating the rotary shaft (52) and to determine that the lock pin (68) has moved to the lock position when the rotation angle of the rotary shaft after the gradual increase of the force for rotating the rotary shaft is started is equal to or less than a first rotation angle reference value and a force for rotating the rotary shaft is equal to or higher than a first force reference value.

3. The automatic tilting vehicle (10) according to claim 1, **characterized in that** the control unit (20) is configured, when an ignition switch (98) changes from OFF to ON, to rotate the rotary shaft (52) by the actuator (38) in a direction in which a tilt angle (θ) of the vehicle decreases and to move the lock pin from the lock position to the unlock position by the driving device (70).

4. The automatic tilting vehicle (10) according to claim 3, **characterized in that** the control unit (20) is configured to gradually increase a force for rotating the rotary shaft (52) and to determine that the lock pin (68) has moved to the unlock position when a force for rotating the rotary shaft is equal to or less than a second force reference value and a rotation angle of the rotary shaft after starting the rotation of the rotary shaft is larger than a second rotation angle reference value.

5. The automatic tilting vehicle (10) according to any one of claims 1 to 4, **characterized in that** the lock pin (68) includes a reciprocating member reciprocated by the driving device, an engaging member (78) supported displaceably with respect to the reciprocating member (76) along the reciprocating direction by the reciprocating member, and an elastic member (80) that urges the engaging member (78) in a direction away from the reciprocating member, and the engaging member is positioned between two of the plurality of teeth (72) in the lock position and is not positioned between two of the plurality of teeth (72) in the unlock position.

## Patentansprüche

1. Automatisch neigendes Fahrzeug (10), das ein Paar Räder (12L, 12R), die lateral voneinander beabstandet und durch entsprechende Radträger (16L, 16R) drehbar gestützt sind, eine Fahrzeugneigungsvorrichtung (18), die dazu konfiguriert ist, das Fahrzeug zu der Innenseite einer Kurve zu einer Zeit einer Kurvenfahrt des Fahrzeugs zu neigen, und eine Steuerungseinheit (20) hat, die dazu konfiguriert ist, die Fahrzeugneigungsvorrichtung zu steuern; wobei die Fahrzeugneigungsvorrichtung ein Pendelbauteil (36), das um eine Pendelachse (34) pendelt, die sich in der Längsrichtung des Fahrzeugs erstreckt, ein Stellglied (38), das eine Drehwelle (52) um die Pendelachse dreht, um das Pendelbauteil um die Pendelachse pendeln zu lassen, ein Paar Verbindungsstangen (40L, 40R), die an Schwenkanbringungsabschnitten eines oberen Endes an dem Pendelbauteil schwenkbar angebracht sind und an Schwenkanbringungsabschnitten eines unteren Endes auf beiden lateralen Seiten der Pendelachse an den entsprechenden Radträgern schwenkbar angebracht sind, und eine Verriegelungsvorrichtung (50) hat, die dazu konfiguriert ist, die Drehung der Drehwelle (52) selektiv zu verhindern, **dadurch gekennzeichnet, dass**
die Verriegelungsvorrichtung (50) Folgendes hat: einen Verriegelungshalter (66), der einstückig durch die Drehwelle gehalten ist und eine Vielzahl von Zähnen (72) hat, die um die Pendelachse angeordnet sind, einen Verriegelungszapfen (68), der dazu in der Lage ist, in einer Richtung hin- und herzugehen, die quer zu der Pendelachse ist, und eine Antriebsvorrichtung (70) zum Bewegen des Verriegelungszapfens zwischen einer Verriegelungsposition, in der ein Vorderendabschnitt des Verriegelungszapfen zwischen zwei der Vielzahl der Zähne positioniert ist, und einer Entriegelungsposition, in der der Vorderendabschnitt des Verriegelungszapfen nicht zwischen zwei der Vielzahl der Zähne positioniert ist, und
**dadurch gekennzeichnet, dass**
die Steuerungseinheit (20) dazu konfiguriert ist, dann, wenn ein Zündungsschalter (98) sich von EIN zu AUS ändert, den Verriegelungszapfen (68) von der Entriegelungsposition zu der Verriegelungsposition durch die Antriebsvorrichtung (70) zu bewegen und die Drehwelle (52) durch das Stellglied (38) in einer Richtung zu bewegen, in der ein Neigungswinkel (Θ) des Fahrzeugs größer wird.

2. Automatisch neigendes Fahrzeug (10) nach Anspruch 1, **dadurch gekennzeichnet, dass** die Steuerungseinheit (20) dazu konfiguriert ist, eine Kraft zum Drehen der Drehwelle (52) allmählich zu erhöhen und zu bestimmen, dass sich der Verriegelungszapfen (68) zu der Verriegelungsposition bewegt hat, wenn der Drehwinkel der Drehwelle, nachdem die allmähliche Erhöhung der Kraft zum Drehen der Drehwelle begonnen hat, gleich wie oder weniger als ein erster Drehwinkelbezugswert ist und eine Kraft zum Drehen der Drehwelle gleich wie oder höher als einen ersten Kraftbezugswert ist.

3. Automatisch neigendes Fahrzeug (10) nach Anspruch 1, **dadurch gekennzeichnet, dass** die Steuerungseinheit (20) dazu konfiguriert ist, dann, wenn ein Zündungsschalter (98) sich von AUS zu EIN ändert, die Drehwelle (52) durch das Stellglied (38) in einer Richtung zu drehen, in der sich ein Neigungswinkel (Θ) des Fahrzeugs verringert, und den Verriegelungszapfen von der Verriegelungsposition zu der Entriegelungsposition durch die Antriebsvorrichtung (70) zu bewegen.

4. Automatisch neigendes Fahrzeug (10) Anspruch 3, **dadurch gekennzeichnet, dass** die Steuerungseinheit (20) dazu konfiguriert ist, eine Kraft zum Drehen der Drehwelle (52) allmählich zu erhöhen und zu bestimmen, dass sich der Verriegelungszapfen (68) zu der Entriegelungsposition bewegt hat, wenn eine Kraft zum Drehen der Drehwelle gleich wie oder weniger als ein zweiter Kraftbezugswert ist und ein Drehwinkel der Drehwelle nach dem Beginn der Drehung der Drehwelle größer ist als ein zweiter Drehwinkelbezugswert.

5. Automatisch neigendes Fahrzeug (10) nach einem der Ansprüche 1 bis 4, **dadurch gekennzeichnet, dass** der Verriegelungszapfen (68) ein hin- und hergehendes Bauteil hat, das durch die Antriebsvorrichtung hin- und herbewegt wird, ein Eingriffsbauteil (78), das durch das hin- und hergehende Bauteil verschieblich entlang der Hin-und-Her-Bewegungsrichtung mit Bezug auf das hin- und hergehende Bauteil (76) gestützt ist, und ein elastisches Bauteil (80) hat, das das Eingriffsbauteil (78) in einer Richtung weg von dem hin- und hergehenden Bauteil drängt, und das Eingangsbauteil in der Verriegelungsposition zwischen zwei der Vielzahl der Zähne (72) positioniert ist und in der Entriegelungsposition nicht zwischen zwei der Vielzahl der Zähne (72) positioniert ist.

## Revendications

1. Véhicule à inclinaison automatique (10) qui comprend une paire de roues (12L, 12R) qui sont latéralement espacées et supportées en rotation par des supports de roue (16L, 16R) correspondants, un dispositif d'inclinaison de véhicule (18) qui est configuré pour incliner le véhicule vers le côté interne d'un virage au moment de la prise de virage du véhicule, et une unité de commande (20) qui est configurée pour commander le dispositif d'inclinaison de véhicule ; le dispositif d'inclinaison de véhicule comprend un élément d'oscillation (36) oscillant autour d'un axe d'oscillation (34) s'étendant dans la direction longitudinale du véhicule, un actionneur (38) qui fait tourner un arbre de rotation (52) autour de l'axe d'oscillation pour osciller l'élément d'oscillation autour de l'axe d'oscillation, une paire de tiges de raccordement (40L, 40R) qui sont fixées de manière pivotante sur l'élément d'oscillation au niveau des parties de fixation pivotantes d'extrémité supérieures et fixées de manière pivotante aux supports de roue correspondants, au niveau des parties de fixation pivotantes d'extrémité inférieures des deux côtés latéraux de l'axe d'oscillation, et un dispositif de blocage (50) qui est configuré pour empêcher sélectivement la rotation de l'arbre de rotation (52), **caractérisé en ce que** :
le dispositif de blocage (50) comprend un support de blocage (66) maintenu, de manière solidaire, par l'arbre de rotation et ayant une pluralité de dents (72) agencées autour de l'axe d'oscillation, une broche de blocage (68) pouvant effectuer un mouvement de va-et-vient dans une direction transversale par rapport à l'axe d'oscillation, et un dispositif d'entraînement (70) pour déplacer la broche de blocage entre une position de blocage dans laquelle une partie de pointe de la broche de blocage est positionnée entre deux de la pluralité de dents et une position de déblocage dans laquelle la partie de pointe de la broche de blocage n'est pas positionnée entre deux de la pluralité de dents, et
**caractérisé en ce que** :
l'unité de commande (20) est configurée, lorsqu'un commutateur d'allumage (98) passe de la position de marche à la position d'arrêt, pour déplacer la broche de blocage (68) de la position de déblocage à la position de blocage par le dispositif d'entraînement (70) et pour faire tourner l'arbre de rotation (52) par l'actionneur (38) dans une direction dans laquelle un angle d'inclinaison (θ) du véhicule augmente.

2. Véhicule à inclinaison automatique (10) selon la revendication 1, **caractérisé en ce que** l'unité de commande (20) est configurée pour augmenter progressivement une force pour faire tourner l'arbre de rotation (52) et pour déterminer que la broche de blocage (68) s'est déplacée dans la position de blocage lorsque l'angle de rotation de l'arbre de rotation, après que l'augmentation progressive de la force pour faire tourner l'arbre de rotation a commencé, est égal ou inférieur à une première valeur de référence d'angle de rotation et une force pour faire tourner l'arbre de rotation est égale ou supérieure à une première valeur de référence de force.

3. Véhicule à inclinaison automatique (10) selon la revendication 1, **caractérisé en ce que** l'unité de commande (20) est configurée, lorsqu'un commutateur d'allumage (98) passe de la position d'arrêt à la position de marche, pour faire tourner l'arbre de rotation (52) par l'actionneur (38) dans une direction dans laquelle un angle d'inclinaison (θ) du véhicule augmente et pour faire passer la broche de blocage de la position de blocage à la position de déblocage par le dispositif d'entraînement (70).

4. Véhicule à inclinaison automatique (10) selon la revendication 3, **caractérisé en ce que** l'unité de commande (20) est configurée pour augmenter progressivement une force pour faire tourner l'arbre de rotation (52) et pour déterminer que la broche de blocage (68) est passée dans la position de déblocage lorsqu'une force pour faire tourner l'arbre de rotation est égale ou inférieure à une seconde valeur de référence de force et un angle de rotation de l'arbre de rotation après avoir commencé la rotation de l'arbre de rotation est supérieur à une seconde valeur de référence d'angle de rotation.

5. Véhicule à inclinaison automatique (10) selon l'une quelconque des revendications 1 à 4, **caractérisé en ce que** la broche de blocage (68) comprend un élément de va-et-vient qui peut effectuer un mouvement de va-et-vient grâce au dispositif d'entraînement, un élément de mise en prise (78) supporté, de manière déplaçable par rapport à l'élément de va-et-vient (76) le long de la direction de va-et-vient par l'élément de va-et-vient, et un élément élastique (80) qui pousse l'élément de mise en prise (78) dans une direction à distance de l'élément de va-et-vient, et l'élément de mise en prise est positionné entre deux de la pluralité de dents (72) dans la position de blocage et n'est pas positionné entre deux de la pluralité de dents (72) dans la position de déblocage.
